# EUROPÄISCHE PATENTANMELDUNG

(11) **EP 3 886 427 A1**
(43) Veröffentlichungstag der Anmeldung: **29.09.2021**
(21) Anmeldenummer: 20166190.7
(22) Anmeldetag: 27.03.2020
(51) Int. Cl.: H04N 5/232, H04N 5/353, H04N 5/235

(54) **OPTISCHER SENSOR UND EIN VERFAHREN ZUR ERFASSUNG VON OBJEKTEN MITTELS EINES OPTISCHEN SENSORS**

(71) Anmelder: Leuze electronic GmbH + Co. KG, 73277 Owen/Teck (DE)
(72) Erfinder: Müller, Thomas, 73119 Zell u.A. (DE)
(74) Vertreter: Ruckh, Rainer Gerhard

(57) **Zusammenfassung**

Die Erfindung betrifft einen optischen Sensor (1) zur Erfassung von Objekten (10) in einem Überwachungsbereich. Der optische Sensor umfasst wenigstens einen eine matrixförmige Anordnung von Empfangselementen aufweisenden Bildsensor (5) und eine Steuer- und Auswerteeinheit (8), in welcher in Abhängigkeit von Empfangssignalen der Empfangselemente ein Objektfeststellungssignal generiert wird. Der Bildsensor (5) ist als Rolling-Shutter-Bildsensor (5) ausgebildet. Dem Bildsensor (5) ist ein LC-Shutter (6) vorgeordnet ist.

## Beschreibung

Die Erfindung betrifft einen optischen Sensor und ein Verfahren zur Erfassung von Objekten mittels eines optischen Sensors.

Derartige optische Sensoren umfassen generell einen Bildsensor mit einer matrixförmigen Anordnung von Empfangselementen, das heißt die Empfangselemente sind in Zeilen und Spalten angeordnet. Zudem weist der optische Sensor typischerweise eine Beleuchtungseinheit auf. Die vorgenannten Komponenten werden von einer Steuer- und Auswerteeinheit gesteuert. In dieser Steuer- und Auswerteeinheit erfolgt auch eine Auswertung von Empfangssignalen oder einzelnen Empfangselementen um damit ein Objektfeststellungssignal zu generieren.

Der optische Sensor kann zu Überwachungszwecken eingesetzt werden. Dann liefert das Objektfeststellungssignal eine Information darüber, ob ein Objekt in einem Überwachungsbereich vorhanden ist oder nicht. Weiterhin kann der optische Sensor auch als Codeleser, insbesondere Barcodeleser ausgebildet sein.

Prinzipiell kann der Bildsensor des optischen Sensors als Global-Shutter-Bildsensor ausgebildet sein. Bei diesem Global-Shutter-Bildsensor werden alle Empfangselemente zeitgleich belichtet. Dies ist dann vorteilhaft, wenn sich bewegende, insbesondere schnell bewegende Objekte fehlerfrei erkannt werden müssen, da mit dem Global-Shutter-Bildsensor auch von schnell beweglichen Objekten verzerrungsfreie Bilder aufgenommen werden.

Nachteilig ist jedoch, dass Global-Shutter-Bildsensor relativ teuer sind und eine große optisch aktive Fläche aufweisen, wodurch entsprechend große Empfangsoptiken, insbesondere Objektive notwendig werden, was die Bauform des optischen Sensors unerwünscht erhöht.

Generell können in dem optischen Sensor auch Rolling-Shutter-Bildsensoren eingesetzt werden, die erheblich kostengünstiger sind und kleinere Bauformen aufweisen als Global-Shutter-Bildsensoren.

Nachteilig hierbei ist jedoch, dass bewegte, insbesondere schnell bewegte Objekte nicht verzerrungsfrei mit derartigen Rolling-Shutter-Bildsensoren erfasst werden können. Dies beruht darauf, dass bei Rolling-Shutter-Bildsensoren die Empfangselemente des Bildsensors während des Auslesens noch lichtempfindlich sind, wobei Zeilen oder Spalten der Empfangselemente zeitlich versetzt ausgelesen werden. Da sich das Objekt von einem Auslesevorgang zum nächsten weiterbewegt, entsteht aufgrund des Rolling-Shutter-Effekts ein verzerrtes Bild des Objekts, was zu Fehldetektionen führen kann.

Der Erfindung liegt die Aufgabe zugrunde einen optischen Sensor der eingangs genannten Art bereitzustellen, welcher bei einfachem konstruktivem Aufbau eine hohe Funktionalität aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Überwachungsbereich. Der optische Sensor umfasst wenigstens einen eine matrixförmige Anordnung von Empfangselementen aufweisenden Bildsensor und eine Steuer- und Auswerteeinheit, in welcher in Abhängigkeit von Empfangssignalen der Empfangselemente ein Objektfeststellungssignal generiert wird. Der Bildsensor ist als Rolling-Shutter-Bildsensor ausgebildet. Dem Bildsensor ist ein LC-Shutter vorgeordnet.

Durch den zusätzlichen Einsatz des LC-Shutters können auf überraschend einfache Weise auch von bewegten Objekten verzerrungsfreie Bilder erhalten werden obwohl ein Rolling-Shutter-Bildsensor eingesetzt wird, bei welchem durch das zeitlich versetzte Auslesen von Zeiten oder Spalten von Empfangselementen prinzipbedingt ein Rolling-Shutter-Effekt vorhanden ist.

Dies beruht darauf, dass mit LC-Shutter gezielt, vorzugsweise in einem vorgegebenen Zeittakt Umgebungslicht ausgefiltert werden kann, wenn dieser lichtundurchlässig geschaltet ist. Der Betrieb des LC-Shutters, insbesondere die Zeiten, in welchen dieser lichtdurchlässig geschaltet ist, ist an den Betrieb des Rolling-Shutter-Bildsensors so angepasst, dass auch von bewegten Objekten verzerrungsfreie Bilder generiert werden.

Damit ist die Nachweissicherheit des optischen Sensors signifikant erhöht. Dieser Vorteil ist kombiniert mit einem signifikanten Kostenvorteil, da die Kombination eines Rolling-Shutter-Bildsensors mit einem LC-Shutter kostengünstiger realisiert werden kann als ein Global-Shutter-Bildsensor.

Weiterhin ist vorteilhaft, dass ein Rolling-Shutter-Bildsensor erheblich kleinere optisch aktive Flächen als ein Global-Shutter-Bildsensor aufweist, da bei gleicher Anzahl ein Empfangselement dieser Fläche bei einem Rolling-Shutter-Bildsensor erheblich kleiner ist als bei einem Global-Shutter-Bildsensor. Demzufolge können auch kleinere Empfangsoptiken, insbesondere Objektive, für den Bildsensor gewählt werden, was kleinere Bauformen des optischen Sensors ermöglicht. Zudem können dadurch die Herstellkosten der optischen Sensoren reduziert werden.

Besonders vorteilhaft weist der optische Sensor eine Beleuchtungseinheit auf.

Zweckmäßig steuert die Steuer- und Auswerteeinheit den Betrieb des Bildsensors, des LC-Shutters und der Beleuchtungseinheit.

Gemäß einer vorteilhaften Ausgestaltung ist der LC-Shutter so gesteuert, dass dieser nur innerhalb begrenzter, durch Pausen getrennter Zeitintervalle lichtdurchlässig ist.

Daran angepasst sendet die Beleuchtungseinheit nur innerhalb der Zeitintervalle Lichtblitze aus.

Bereits durch diese zeitliche Abstimmung wird das Detektionsverhalten des optischen Sensors erheblich verbessert.

Besonders vorteilhaft wird eine lange Belichtungszeit des Bildsensors derart gewählt, dass alle auszulesenden Spalten bzw. Zeiten des Bildsensors zeitgleich lichtempfindlich sind. Mit dem vorgeschalteten LC-Shutter, dessen Ansteuerung zeitlich nicht hochaufgelöst sein muss, wird ein Großteil des Umgebungslichts unterdrückt. Durch ein exakt vorgegebenes gepulstes Blitzen mit der Beleuchtungseinheit kann eine Belichtungssteuerung im Mikrosekundenbereich erfolgen.

Damit wird, obwohl der Bildsensor als Rolling-Shutter-Bildsensor ausgebildet ist, das Verhalten eines Global-Shutter-Bildsensors erhalten, da durch die Positionierung der Zeitintervalle, in denen der LC-Shutter lichtdurchlässig ist, auf die Teilzeitintervalle, in denen für alle Zeilen oder Spalten gleichzeitig ein Auslesevorgang erfolgt, exakt ein Global-Shutter-Bildsensor nachgebildet wird. Damit können auch sich schnell bewegende Objekte mit dem optischen Sensor verzerrungsfrei erfasst werden, obwohl dieser lediglich einen Rolling-Shutter-Bildsensor aufweist.

Zweckmäßig weist der Bildsensor einen Global Reset auf.

Damit können alle Empfangselemente des Rolling-Shutter-Bildsensors gleichzeitig aktiviert werden.

Weiter vorteilhaft ist der Bildsensor in Form eines CMOS Bildsensors ausgebildet.

Zweckmäßig kann mit dem LC-Shutter auch einfallendes Licht polarisiert werden, was für bestimmte Applikationen vorteilhaft sein kann, insbesondere dann, wenn die Beleuchtungseinheit polarisiertes Licht emittiert.

Um einfallendes Licht auf den Rolling-Shutter-Bildsensor zu bündeln kann diesem ein Objektiv vorgeordnet sein.

Der erfindungsgemäße optische Sensor kann dahingehend erweitert sein, dass dieser mehrere Rolling-Shutter-Bildsensoren aufweist.

Dann ist jedem Rolling-Shutter-Bildsensor ein LC-Shutter vorgeordnet.

Weiterhin ist dem oder den Rolling-Shutter-Bildsensoren ein Objektiv vorgeordnet.

Dabei können ein gemeinsamer LC-Shutter oder mehrere LC-Shutter vorgesehen sein. Ebenso können ein gemeinsames Objektiv oder mehrere Objektive vorgesehen sein.

Der erfindungsgemäße optische Sensor kann zur Überwachung eines Überwachungsbereichs dienen. Dann gibt das Objektfeststellungssignal des optischen Sensors an, ob ein Objekt im Überwachungsbereich vorhanden ist oder nicht. Der optische Sensor kann auch zur Identifikation von Objekten eingesetzt werden. Insbesondere kann der optische Sensor als Barcodeleser ausgebildet sein.

Die Erfindung wird im Folgenden anhand den Zeichnungen erläutert. Es zeigen:
- Figur 1:: Ausführungsbeispiel des erfindungsgemäßen optischen Sensors.
- Figur 2:: Erste Variante von empfangsseitigen Optikkomponenten des optischen Sensors gemäß Figur 1.
- Figur 3:: Zweite Variante von empfangsseitigen Optikkomponenten des optischen Sensors gemäß Figur 1.
- Figur 4:: Zeitlicher Verlauf der Aktivierungen des LC-Shutters und der Beleuchtungseinheit des optischen Sensors gemäß Figur 1.
- Figur 5:: Zeitlicher Verlauf der Auslesevorgänge für den Rolling-Shutter-Bildsensor des optischen Sensors gemäß Figur 1.

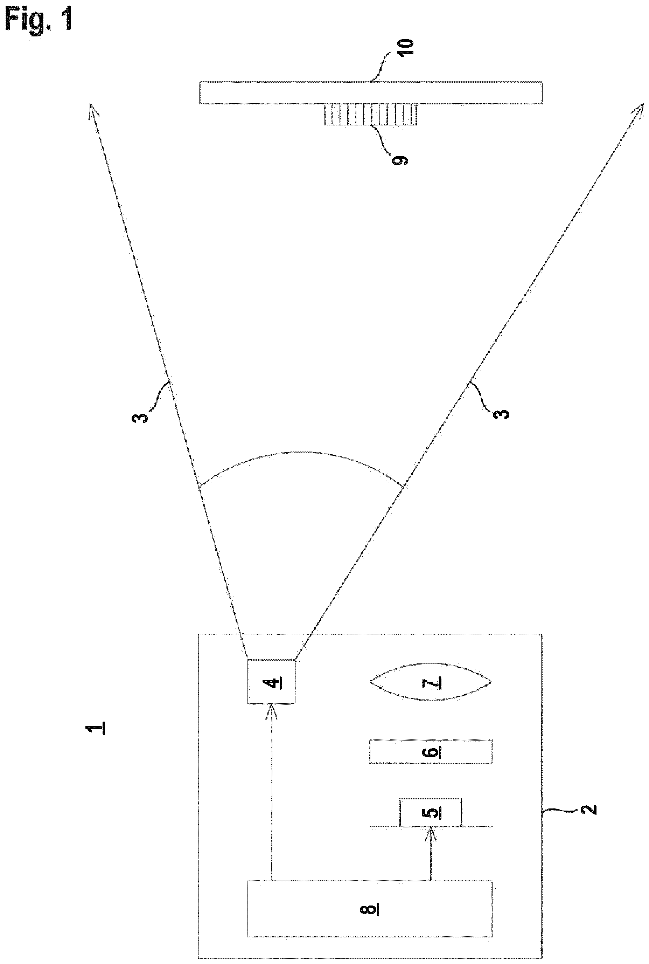

Figur 1 zeigt schematisch ein Ausführungsbeispiel des optischen Sensors 1, der im vorliegenden Fall als Barcodeleser ausgebildet ist.

Die Komponenten des optischen Sensors 1 sind in einem Gehäuse 2 integriert. Der optische Sensor 1 umfasst eine Lichtstrahlen 3 emittierende Beleuchtungseinheit 4. Weiterhin umfasst der optische Sensor 1 einen Bildsensor 5 in Form eines CMOS-Arrays mit in Zeilen und Spalten angeordneten Pixeln, das heißt Empfangselementen. Dem Bildsensor 5 ist ein LC-Shutter 6 vorgeordnet. Dem LC-Shutter 6 ist ein eine Empfangsoptik bildendes Objektiv 7 angeordnet.

Weiterhin ist eine Steuer- und Auswerteeinheit 8 vorgesehen, die von einem Mikroprozessor oder dergleichen gebildet ist. Die Steuer- und Auswerteeinheit 8 steuert den Betrieb der Beleuchtungseinheit 4, des Bildsensors 5 und des LC-Shutters 6. Weiterhin wird in der Steuer- und Auswerteeinheit 8 in Abhängigkeit der Empfangssignale ein Objektfeststellungssignal generiert.

Mit dem als Barcodeleser ausgebildeten optischen Sensor 1 werden Barcodes 9 erfasst, die auf Objekten 10 angeordnet sind, die durch den vom optischen Sensor 1 erfassten Überwachungsbereich bewegt werden.

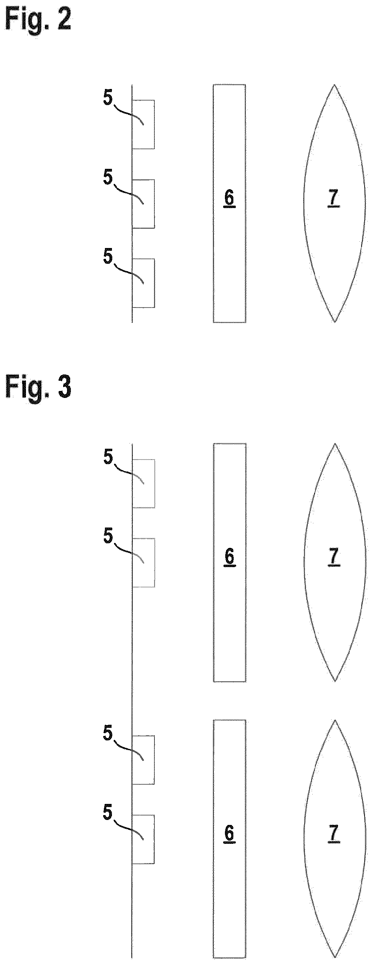

Die Figuren 2 und 3 zeigen mögliche Erweiterung der empfangsseitigen Optickomponenten des optischen Sensors 1 gemäß Figur 1.

Bei der Ausführungsform gemäß Figur 2 sind mehrere, vorzugsweise identische Bildsensoren 5 vorgesehen, welchen ein LC-Shutter 6 und ein Objektiv 7 zugeordnet sind.

Auch bei der Ausführungsform gemäß Figur 3 sind mehrere Bildsensoren 5 vorgesehen, wobei einer ersten Gruppe von Bildsensoren 5 ein erster LC-Shutter 6 und ein erstes Objektiv 7 zugeordnet sind, und wobei einer zweiten Gruppe von Bildsensoren 5 ein zweiter LC-Shutter 6 und ein zweites Objektiv 7 zugeordnet sind.

Generell kann bei einem optischen Sensor 1 mit mehreren Bildsensoren 5 die Anzahl von zugeordneten LC-Shutter 6 und Objektiven 7 frei gewählt werden.

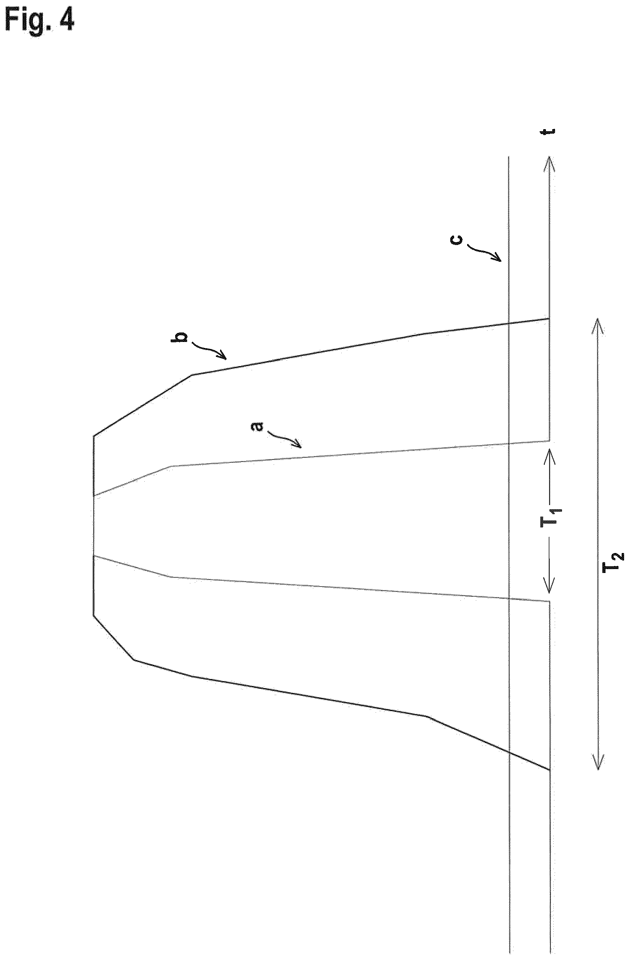

Mit der Beleuchtungseinheit 4 werden in vorgegebenen Zeitabständen einzelne Lichtblitze erzeugt, wobei ein derartiger Lichtblitz in Figur 4 mit a bezeichnet ist. Die Dauer des Lichtblitzes a beträgt > 1.

Der LC-Shutter 6 wird über die Steuer- und Auswerteeinheit 8 so angesteuert, dass der LC-Shutter 6 nur während vorgegebenen Zeitintervallen lichtdurchlässig ist. Ein derartiges Zeitintervall mit der Dauer T₂ ist in Figur 4 mit b bezeichnet. Ansonsten ist der LC-Shutter 6 lichtundurchlässig geschaltet, sodass kein störendes Umgebungslicht (in Figur 4 mit c bezeichnet) den LC-Shutter 6 passieren und zum Bildsensor 5 gelangen kann.

Die Ansteuerung der Beleuchtungseinheit 4 und des LC-Shutters 6 erfolgt so, dass die Lichtblitze a innerhalb des Zeitintervalls b, innerhalb derer der LC-Shutter 6 lichtdurchlässig geschaltet ist, liegen (Figur 4). Die Zeitdauer T₁ eines Lichtblitzes a ist hierbei kleiner als die Dauer eines Zeitintervalls b.

Nur während des Zeitintervalls b ist der LC-Shutter 6 lichtdurchlässig geschaltet, sodass Licht, insbesondere die von einem Barcode 9 zurückreflektierten Lichtstrahlen 3 der Beleuchtungseinheit 4 zum Bildsensor 5 gelangen können.

Der Bildsensor 5 ist erfindungsgemäß als Rolling-Shutter-Bildsensor ausgebildet. Bei dem Rolling-Shutter-Bildsensor werden die Zeilen (oder alternativ die Spalten) der Empfangselemente zyklisch zeitlich versetzt zueinander ausgelesen.

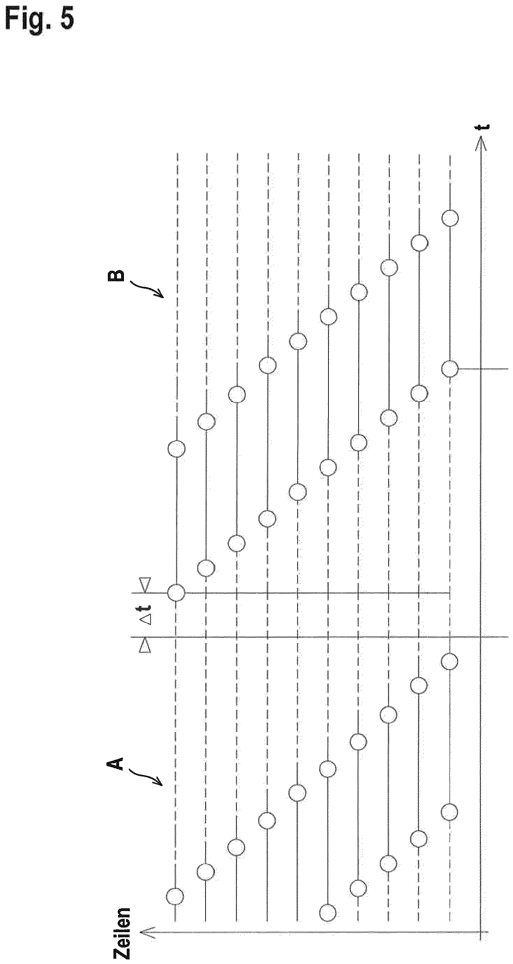

Dies ist in Figur 5 dargestellt. In einzelnen Zyklen A, B ... werden die einzelnen Zeilen 1, 2 ... N des Rolling-Shutter-Bildsensors zeitlich versetzt zueinander ausgelesen. Dabei überlappen sich die Auslesezeitintervalle der einzelnen Zeilen, in denen das Auslesen erfolgt, teilweise. Die Auslesezeitintervalle sind für alle Zeilen gleich groß.

Der Auslesebetrieb der Zeilen des Rolling-Shutter-Bildsensor ist an den Betrieb des LC-Shutters 6 und der Beleuchtungseinheit 4 so angepasst, dass innerhalb eines Zyklus der LC-Shutter 6 in einem Teilzeitintervall Δt der LC-Shutter 6 aktiviert ist und von der Beleuchtungseinheit 4 ein Lichtblitz a ausgesendet wird.

Wie Figur 5 zeigt, ist der Auslesevorgang der einzelnen Zeilen im Teilzeitintervall für alle Zeilen aktiv. Damit wird durch den LC-Shutter 6 für den Rolling-Shutter-Bildsensor das Verhalten eines Global-Shutter-Bildsensors nachgebildet. Dies bedeutet, dass, obwohl der Bildsensor 5 als Rolling-Shutter-Bildsensor ausgebildet ist, Rolling-Shutter-Effekte, die zur Verzerrung von schnell durch den Überwachungsbereich des optischen Sensors 1 bewegten Bildern führen, vermieden werden.

### Bezugszeichenliste

- (1): Optischer Sensor
- (2): Gehäuse
- (3): Lichtstrahlen
- (4): Beleuchtungseinheit
- (5): Bildsensor
- (6): LC-Shutter
- (7): Objektiv
- (8): Steuer- und Auswerteeinheit
- (9): Barcode
- (10): Objekt

- a: Lichtblitz
- b: Zeitintervall
- c: Umgebungslicht

## Patentansprüche

1. Optischer Sensor (1) zur Erfassung von Objekten (10) in einem Überwachungsbereich, mit wenigstens einem eine matrixförmige Anordnung von Empfangselementen aufweisenden Bildsensor (5) und mit einer Steuer- und Auswerteeinheit (8), in welcher in Abhängigkeit von Empfangssignalen der Empfangselemente ein Objektfeststellungssignal generiert wird, **dadurch gekennzeichnet, dass** der Bildsensor (5) als Rolling-Shutter-Bildsensor (5) ausgebildet ist, und dass dem Bildsensor (5) ein LC-Shutter (6) vorgeordnet ist.

2. Optischer Sensor (1) nach Anspruch 1, **dadurch gekennzeichnet, dass** dieser eine Beleuchtungseinheit (4) aufweist.

3. Optischer Sensor (1) nach einem der Ansprüche 1 oder 2, **dadurch gekennzeichnet, dass** die Steuer- und Auswerteeinheit (8) den Betrieb des Bildsensors (5), des LC-Shutters (6) und der Beleuchtungseinheit (4) steuert.

4. Optischer Sensor (1) nach einem der Ansprüche 1 bis 3, **dadurch gekennzeichnet, dass** der LC-Shutter (6) so gesteuert ist, dass dieser nur innerhalb begrenzter, durch Pausen getrennter Zeitintervalle lichtdurchlässig ist.

5. Optischer Sensor (1) nach Anspruch 4, **dadurch gekennzeichnet, dass** die Beleuchtungseinheit (4) nur innerhalb der Zeitintervalle Lichtblitze aussendet.

6. Optischer Sensor (1) nach einem der Ansprüche 1 bis 5, **dadurch gekennzeichnet, dass** die einzelnen Zeilen oder Spalten des Bildsensors (5) zyklisch in zueinander zeitlich versetzten, teilweise überlappenden Auslesezeitintervallen ausgelesen werden.

7. Optischer Sensor (1) nach Anspruch 6, **dadurch gekennzeichnet, dass** innerhalb eines Zyklus ein Teilzeitintervall vorhanden ist, innerhalb dessen die Auslesezeitintervalle aller Spalten oder Zeilen gleichzeitig aktiviert sind.

8. Optischer Sensor (1) nach Anspruch 7, **dadurch gekennzeichnet, dass** die Zeitintervalle, innerhalb derer der LC-Shutter (6) lichtdurchlässig geschaltet ist, innerhalb der Teilzeitintervalle liegen.

9. Optischer Sensor (1) nach einem der Ansprüche 1 bis 8, **dadurch gekennzeichnet, dass** der Bildsensor (5) einen Global Reset aufweist.

10. Optischer Sensor (1) nach einem der Ansprüche 1 bis 9, **dadurch gekennzeichnet, dass** der Bildsensor (5) in Form eines CMOS Bildsensors ausgebildet ist.

11. Optischer Sensor (1) nach einem der Ansprüche 1 bis 10, **dadurch gekennzeichnet, dass** dieser mehrere Rolling-Shutter-Bildsensoren aufweist.

12. Optischer Sensor (1) nach Anspruch 11, **dadurch gekennzeichnet, dass** jedem Rolling-Shutter-Bildsensor ein LC-Shutter (6) vorgeordnet ist.

13. Optischer Sensor (1) nach Anspruch 1 bis 11, **dadurch gekennzeichnet, dass** dem oder den Rolling-Shutter-Bildsensoren ein Objektiv (7) vorgeordnet ist.

14. Optischer Sensor (1) nach einem der Ansprüche 1 bis 13, **dadurch gekennzeichnet, dass** dieser als Codeleser ausgebildet ist.

15. Verfahren zur Erfassung von Objekten (10) in einem Überwachungsbereich mittels eines optischen Sensors (1), mit wenigstens einem eine matrixförmige Anordnung von Empfangselementen aufweisenden Bildsensor (5) und mit einer Steuer- und Auswerteeinheit (8), in welcher in Abhängigkeit von Empfangssignalen der Empfangselemente ein Objektfeststellungssignal generiert wird, **dadurch gekennzeichnet, dass** der Bildsensor (5) als Rolling-Shutter-Bildsensor ausgebildet ist, und dass dem Bildsensor (5) ein LC-Shutter (6) vorgeordnet ist.
